# EUROPEAN PATENT APPLICATION

(11) **EP 1 988 137 A1**
(43) Date of publication of application: **05.11.2008**
(21) Application number: 07714725.4
(22) Date of filing: 21.02.2007
(51) Int. Cl.: C09D 135/00, C03C 17/32, C09D 5/00, C09D 7/12, C09D 123/00, C09D 151/06

(54) **WATER-BASE COATING COMPOSITION AND GLASSWORK**

(30) Priority: 21.02.2006 JP 2006044466
(71) Applicant: Nihon Yamamura Glass Co. Ltd., Nishinomiya-shi, Hyogo 662-8586 (JP)
(72) Inventor: NISHINO, Hiroyuki, Nishinomiya-shi, Hyogo 662-8586 (JP); MATSUMOTO, Kazuto, Nishinomiya-shi, Hyogo 662-8586 (JP); ONAKA, Toshinari, Nishinomiya-shi, Hyogo 662-8586 (JP)
(74) Representative: Behnisch, Werner
(86) International application number: PCT/JP2007/053225
(87) International publication number: WO 2007/097376

(57) **Abstract**

Disclosed are an aqueous coating composition **characterized in that** it maintains scratch resistance even after subjected to water treatment, and prevents contamination of the conveyor lines caused by wearing and falling off of the coating, and allows stable labeling and provides the surface with easy peeling property, as well as glass products coated with it. The aqueous coating composition of the present invention comprises a resin dispersed in water in the presence of a base and a silane coupling agent, wherein the resin is at least one compound selected from the group consisting of an α-olefin/maleic anhydride copolymer and a partial reaction product of the copolymer, in particular a product obtained by graft modification by mono-alkyl esterification, and the glass products of the present invention is coated with the composition.

## Description

### TECHNOLOGICAL FIELD

The present invention relates to an aqueous coating composition for surface treatment, in particular to an aqueous coating composition for glass surface treatment for increasing the lubricating property of the surface of glass products so as to making them scratch resistant, as well as to glass products which are coated on their surface with the composition and excel in scratch resistance, wear resistance and lubricating property.

### BACKGROUND ART

In order to endow the surface of glass product with increased lubricating property to make it scratch resistant, thereby preventing scratch-induced strength reduction, coating agents have been used so far which contain an anionic surfactant, a nonionic surfactant or an aqueous emulsion of polyethylene wax, and the like. In the production of glass containers, coating agents of this sort are called "cold-end coating agents". A glass container is rinsed before it is filled with its contents, and often undergoes, after the filling process, hot water treatment in order to sterilize its contents. To prevent a coating once given from being detached in such processes, it is preferred to employ a cold-end coating agent containing water-insoluble polyethylene wax in the form of an aqueous emulsion. As a cold-end coating agent of this sort, a composition has been known which consists of polyethylene wax emulsified with an anionic surfactant (potassium salt of higher fatty acids) (see Patent Document 1).

Meanwhile, in recent year, along with increasing speed in glass container production lines, or that in filling lines at users of glass containers such as foodstuff manufacturers, such troubles have become evident as wearing off of the cold-end coating given on glass containers, as well as contamination of conveyor lines due to the coating wearing and falling off from the glass containers.

To solve these problems, a cold-end coating agent has been developed which contains polyethylene wax and a silane coupling agent (see Patent Document 2) with a certain result. However, as the operation speed of the lines at glass container users has been ever increasing, there exists a need for a cold-end coating agent that enables a coating which is more resistant to wearing and less likely to fall off.
In addition, concerning the labeling of the surface of glass containers, development so far has been focused on the aspect of easy label peeling property (the property that allows one to peel the label when trying to do so for recycling of the containers). However, along with the increasing operation speed of the production lines, a technology for more stable labeling also has come to be required together with the easy peeling property.

Apart from cold-end coating agents, such compositions for coating glass containers have been described in publications so far, that contains resins (polyethylene, polypropylene, polystyrene, polyurethane, vinyl chloride resins, acrylic resins, epoxy resins, ionomer resins) and a silane coupling agent (see Patent Documents 3 and 4). According to the descriptions given in them, however, the coating agents are those for forming thick films of at least about 2-50 µm, and the coatings they form on the surface of bottles are shown to exhibit surface slide angles of not less than 20° (thus, poor lubricating property). While these documents enumerate, as examples of ionomer resins, a number of various resins such as copolymers of a lower olefin having 2-7 carbon atoms and an unsaturated carboxylic acid such as maleic acid, which are neutralized at least in part (with an alkali metal or an alkaline earth metal), and the like, the sole specific examples of coating agents described in them are those containing a polyurethane resin emulsion or a copolymer of methacrylic acid and ethylene as the resin component, (Chemipearl S-100, registered trademark).

Further, also known are a water-absorbing resin dispersion for coating which contains, as a dispersion stabilizer, a copolymer of an α-olefin and maleic anhydride or its partial ester (Patent Document 5), a dispersing agent for pigments consisting of the same resin (Patent Document 6), an aqueous ink containing pigments which are dispersed in the presence of the aqueous dispersion of the same resin (Patent Document 7, 8). However, the dispersions, dispersing agent and aqueous ink do not employ a silane coupling agent simultaneously, and they are not intended to be used to form a coating which firmly adheres on substrates, in particular, glass products.

[Patent Document 1] Japanese Patent Publication S42-1758 (e.g., p. 3, right col.)
[Patent Document 2] Japanese Patent Application Publication 2002-241145
[Patent Document 3] Japanese Patent Application Publication S57-165466
[Patent Document 4] Japanese Patent Application Publication S57-3869
[Patent Document 5] Japanese Patent Application Publication H4-255704
[Patent Document 6] Japanese Patent Application Publication H1-261474
[Patent Document 7] Japanese Patent Application Publication 2004-91519
[Patent Document 8] Japanese Patent Application Publication 2004-91520

### DISCLOSURE OF INVENTION

### [Problem to be solved by the invention]

In these circumstances, an objective of the present invention is to provide an aqueous coating composition for glass characterized in that (1) the scratch resistance with which the composition endows the surface of glass containers is maintained even if the coating is later subjected to hot water treatment carried out in order for rinsing the glass containers and sterilizing their contents, and (2) it prevents the contamination of the conveyor lines, in particular conveyor guides, caused by the wearing and falling off of the coating on the surface of the glass containers.
Another objective of the present invention is to provide glass products, such as glass containers, plate glass, and the like, which are coated on their surface with the aqueous coating composition for glass as characterized above.
A still another objective of the present invention is to provide the aqueous coating composition for glass as characterized above and which endows the surface of glass containers with a property (1) that allows one to stably label on their surface coated with it, and (2) that also allows one to peel the labels applied on them with ease when trying to do so for recycling, without entailing a possibility that they should spontaneously fall off when the glass containers are in the distribution process (easy peeling property)
A still another objective of the present invention is to provide glass products including glass containers, plate glass, and the like, which are coated on their surface with the aqueous coating composition that endows them with the easy peeling property.

### [Means to solve the problem]

As a result of studies for solving the above problems, the present inventors discovered (1) that when a glass surface is treated with an aqueous coating composition formed employing at least one compound, as a resin, selected from the group consisting of an α-olefin/maleic anhydride copolymer and a partial reaction product of the copolymer (i.e., a product obtained by graft modification in which at least part of the maleic anhydride monomer units are reacted with alcohols, amines or amino acids to form esters, amides or imides) together with a silane coupling agent, the resin adheres more stably to the surface of the glass than in the case of conventional coating compositions for glass, and, therefore, the thus formed surface with a low friction coefficient sustains, preventing strength reduction from occurring in the glass products (glass containers, plate glass, etc.), (2) that use of glass containers to whose surface is applied a proper amount of the aqueous coating composition as a cold-end coating composition prevents contamination of conveyor lines, e.g., contamination of conveyor guides, caused by wear and falling off of the coating in glass container production lines or on the side of users (food stuff manufacturing plants, etc.), and further that (3) the composition endows the surface with a property that it allows stable application of labels (those applied to the sides of the products) with a starch-based glue or a synthetic adhesive so that they will not spontaneously fall off when the glass products are in the distribution process, but it allows one to peel them with ease when trying to do so for recycling, and, also in the case of plate glass, while allowing stable application of labels, it permits easy peeling of them when necessary (e.g., after they have fulfilled their roles on door glass, etc.) (easy peeling property). The present invention was completed on the basis of these findings.

Thus, the present invention provides what follows.
1. An aqueous coating composition prepared by addition of a resin to water and dispersion thereof in the presence of a base and addition further of a silane coupling agent, wherein the resin is at least one compound selected from the group consisting of an α-olefin/maleic anhydride copolymer and a partial reaction product of the copolymer.
2. The aqueous coating composition according to 1 above, wherein the acid value of the resin is 100-300 mg-KOH/g.
3. The aqueous coating composition according to 1 or 2 above, wherein the saponification value of the resin is 150-320 mg-KOH/g.
4. The aqueous coating composition according to one of 1 to 3 above, wherein the number average molecular weight of the resin is 1500-4000.
5. The aqueous coating composition according to one of 1 to 4 above, wherein the number of the carbon atoms that form the α-olefin is 10-50.
6. The aqueous coating composition according to one of 1 to 5 above, wherein the partial reaction product of the copolymer is a product obtained by graft modification of at least part of maleic anhydride monomer units by alkyl esterification.
7. The aqueous coating composition according to 6 above, wherein the alkyl esterification is mono-alkyl esterification.
8. The aqueous coating composition according to one of 1 to 7 above, wherein the silane coupling agent has an amino group.
9. The aqueous coating composition according to one of 1 to 8 above, wherein the total concentration of the resin and the base combined is 0.05-1 wt%.
10. The aqueous coating composition according to one of 1 to 9 above, wherein the concentration of the resin is 0.03-0.6 wt%.
11. The aqueous coating composition according to one of 1 to 10 above, wherein the concentration of the silane coupling agent is 0.01-1 wt%.
12. The aqueous coating composition according to one of 1 to 11 above, wherein the composition contains no other surfactant than the resin.
13. The aqueous coating composition according to one of 1 to 12 above, wherein the acid value of the resin is 120-250 mg-KOH/g.
14. The aqueous coating composition according to one of 1 to 13 above, wherein the saponification value of the resin is 160-270 mg-KOH/g.
15. The aqueous coating composition according to one of 1 to 14 above, wherein the number of the carbon atoms that form the α-olefin is 14-40.
16. A glass product which has the surface thereof coated with the aqueous coating composition according to one of 1 to 15 above.
17. The glass product according to 16 above, wherein the glass product which has the surface thereof coated with the aqueous coating composition has, before thus coated, been hot-end coated on the surface.
18. The glass product according to 16 or 17 above which is a glass container.
19. The glass product according to 16 above which is plate glass.
20. A method for treatment of the surface of a glass comprising bringing the surface of the glass into contact with the aqueous coating composition according to one of 1 to 15 above at the surface temperature of 80-130 °C.

### [The effect of the invention]

Glass products having their surface treated with the above described aqueous coating composition have on their surface a stably adhered resin, which is an α-olefin/maleic anhydride copolymer and/or a partial reaction product of the copolymer. The friction coefficient of the glass surface therefore is reduced by the resin, and this, endowing the surface of the glass with scratch resistance, prevents reduction in the strength of the glass from occurring. Further, glass containers having their surface treated with the aqueous coating composition have a remarkable characteristic that they will not contaminate the conveyor lines, e.g., the conveyor guides, of glass container production lines or on the side of users (food stuff manufacturing plants, etc.). Furthermore, glass products having their surface treated with the aqueous coating composition allows easy and stable application of labels (those applied to the sides of the products) with a starch-based glue or a synthetic adhesive, even on a high-speed line, and yet are suited to achieve easy peel labeling.

### BRIEF DESCRIPTION OF DRAWINGS

[FIG. 1] A schematic side view of the line simulator.
[FIG. 2] A plan view of the line simulator illustrating the structure around its gate.
[FIG. 3] A schematic view illustrating the method for measurement of surface slide angle.
[FIG. 4] Photographs showing the typical conditions of the guide members after the line simulator test of the glass containers prepared in Example 2 and Comparative Example 1, respectively.
[FIG. 5] A graph illustrating the variations in the surface slide angle of the glass containers with the lapse of time during the line simulator test.

### [Explanation of Signs]

1 = rotating disk (made of stainless steel)
2 = rotating disk (made of bakelite)
3 = motor
4 = guide rail
5 = guide rail
6 = bracket
7 = replaceable plate
8 = handle
9 = spacer
10 = gate
11 = spring
12 = spray head
13 = set timer
14 = drain trap
15 = drain connection port
16 = aluminum plate
17 = packing
18 = cover
19 = block
20a = gate adjusting screw
20b = setscrew for gate adjustment
21 = glass container
22 = glass container
31-33 = sample bottle
34 = bottle retention platform
35 = scale plate
36 = handle
37 = balancing screw

### BEST MODE FOR CARRYING OUT THE INVENTION

In the present invention, "glass containers" include glass bottles, and table ware, vases and the like made of glass.
The resin that are employed in the aqueous coating composition of the present invention, i.e., an α-olefin/maleic anhydride copolymer and/or a partial reaction product of the copolymer, can be stably dispersed in the form of ultra-fine particles in water in the presence of a base. For use in the preparation of the aqueous coating composition of the present invention, the above resin may first be dispersed in water in the presence of a base to form an aqueous dispersion with solid content of about 10-20 wt%.

The acid value of the above resin (I.e., resin per se before its dispersion in water. The same applies hereinafter.) to be contained in the aqueous coating composition of the present invention is preferably 100-300 mg-KOH/g. Acid values lower than 100 mg-KOH/g could lead to a decreased dispersion stability of the aqueous coating composition, and also to insufficient adhesiveness of labels to the coated surfaces. On the contrary, acid values exceeding 300 mg-KOH/g could lower the water resistance of the coating, and also lead to the loss of the easy peeling property of the labels. For dispersion stability of the aqueous coating composition and adhesiveness and easy peeling property of the labels, as well as for water resistance of the coating, the acid value of the resin is more preferably 120-250 mg-KOH/g. Herein, "acid value" means the amount of potassium hydroxide in milligrams that is required to neutralize the carbxyl groups contained in one gram of the resin.

The saponification value of the resin to be contained in the aqueous coating composition of the present invention is preferably 150-320 mg-KOH/g, more preferably 160-270 mg-KOH/g. Herein, "saponification value" means the amount of potassium hydroxide in milligram that is required to saponify one gram of the resin, and the value equals the sum of the acid value and the ester value thereof.

Further, the number average molecular weight [GPC, standard compound; poly(methyl acrylate)] of the above resin to be contained in the aqueous coating composition of the present invention is preferably 1500-4000. Number average molecular weight lower than 1500 could lower the wear resistance of the coating. On the contrary, if it exceeds 4000, it could raise the softening point of the resin, which then would restrain spreading of the coated resin over the glass surface, thereby leading to failure to achieve sufficient reduction in the friction coefficient of the surface. For proper adhesion of the resin upon its application, e.g., by spraying, to the surface of glass products, the resin preferably has a softening point of 60-130 °C (ASTM D127 method).

Further, the number of the carbon atoms that form the α-olefin, i.e., a component monomer of the above resin to be contained in the aqueous coating composition of the present invention, is preferably 10-50. This is because if the number of the carbon atoms is less than 10, it could lead to an increased friction coefficient of the coated surface, thereby impairing scratch resistance that must be given to the glass surface, and if the number of the carbon atoms exceeds 50, it could impair dispersibility of the resin in water, and also bring about too low a surface free energy, making it impossible to apply labels on the surface. Considering the friction coefficient of the surface, dispersibility and compatibility to labeling, the number of the carbon atoms that form the α-olefin is more preferably 14-40, and particularly preferably 18-34. Though a single α-olefin may be employed alone, a mixture of two or more different α-olefins may also be employed. Copolymerization of an α-olefin and maleic anhydride and/or a partial reaction product of maleic anhydride may be carried out, in the presence or absence of a solvent, according to a conventional method such as free-radical polymerization.

Examples of the partial reaction product of the α-olefin/maleic anhydride copolymer employed in the aqueous coating composition of the present invention include those which are prepared by graft modification of the α-olefin/maleic anhydride copolymer on at least part of its maleic anhydride monomer units through their reaction with alcohols, amines or amino acids to form esters, amides or imides. From the aspect of regulation of the acid value, formation of esters by reaction with alcohols is preferred. Thus, those which contain, as maleic anhydride-derived composing units, maleic acid monoalkyl or dialkyl esters are preferred, among which those containing monoalkyl esters in a greater amount than dialkyl esters are still more preferred. They may contain monoalkyl esters primarily, with substantially no dialkyl esters. Herein, examples of the alcohols preferably include, though are not limited to, those having 1-20 carbon atoms, more preferably those having 1-16 carbon atoms, and most preferably those having 1-8 carbon atoms. Concrete examples of them include methanol, ethanol, 1-propanol, 2-propanol, 1-butanol, 2-butanol. tert-butyl alcohol, pentanol, hexanol, heptanol, octanol, as well as alcohols having a greater number of carbon atoms, such as decyl alcohol, lauryl alcohol, myristyl alcohol, cetyl alcohol and the like. The above modification such as esterification may be carried out either by letting alcohols to react with maleic anhydride while it is still a monomer, and then performing polymerization to form a desired resin, or by performing graft modification after polymerization.
Other methods may also be applied to increase acid value, such as introduction of carboxyl groups into alkyl side chains.

In the aqueous coating composition of the present invention, the aforementioned resin is dispersed in water in the presence of a base, preferably without using any surfactant except the resin. As far as the resin has its acid value and number average molecular weight within the respective ranges as described above, there is no necessity for further adding a surfactant for dispersing the resin. As the aqueous coating composition of the present invention does not contain a further surfactant except the resin itself, the state of the coated surface is hardly dependent on the conditions of bottle rinsing or hot water treatment in a pasteurizer. This realizes stable labeling and reliable easy peeling property, and also offers advantage with respect to prevention of contamination of conveyor guides. Furthermore, it has also an advantage in preventing foaming of the waste water after the process of rinsing. Though there is no particular limitation with regard to the type of the base to be employed in dispersing the resin, it may be exemplified typically by ammonia, triethylamine, triethanolamine, N,N-dimethylaminoethanol, N,N-diethylaminoethanol, NaOH, KOH and the like.

In the aqueous coating composition of the present invention, the total concentration of the above resin and base combined is preferably 0.05-1 wt%. If the total concentration is lower than 0.05 wt%, it could lead not only to failure to achieve a sufficient lubricating property, but also, due to an increased proportion of the exposed surface of the glass, to failure to achieve easy label peeling property. On the contrary, a total concentration exceeding 1 wt% could bring about a slightly opaque glass surface and, therefore, poor appearance, and, moreover, it would be not efficient economically, and could revive the issue of contamination of conveyor guides. In addition, it could lead to falling off of the labels in the distribution process. For protection of the glass surface against scratch, proper adhesion strength of labels, general appearance, and prevention of contamination of conveyor guides, the above total concentration in the aqueous coating composition of the present invention is more preferably 0.07-0.5 wt%. Meanwhile, the concentration of the above resin in the aqueous coating composition of the present invention is preferably 0.03-0.6 wt%, more preferably 0.04-0.45 wt%, and still more preferably 0.05-0.3 wt%, and particularly preferably 0.06-0.2 wt%.

A silane coupling agent to be contained in the aqueous coating composition of the present invention preferably has an amino group. Silane coupling agents are compounds represented by a general formula, RₙSiX₄₋ₙ (wherein n is 1, 2 or 3, and when n is 2 or 3, all the R may be the same or different), and used in various applications as compounds having affinity to both of organic and inorganic compounds, and thus a various kind of them are on the market. The X in the general formula represents a hydrolyzable group, which is exemplified by alkoxy group, acetoxy group, oxime group, eneoxy group, isocyanate group and the like, and n denotes an integer of 1 to 3. The R denotes one of various organic group having a carbon atom bonded directly to Si. Their examples include an alkyl group which may be substituted, an alkenyl group which may be substituted, as well as those consisting of two or more alkyl groups which may be substituted or alkenyl groups which may be substituted, bonded via atoms other than carbon, such as oxygen, nitrogen, etc. A variety of substituents included in silane coupling agents are known. Among such a variety of silane coupling agents, those having an amino group are particularly preferred in the present invention. The group X in the molecule of silane coupling agents, RₙSiX₄₋ₙ, is of a property that it undergoes hydrolysis in water and converted, gradually or rapidly, to an OH group. In the present invention, the term "silane coupling agents having an amino group" includes those represented by RₙSiX₄₋ₙ and their partially or completely hydrolyzed forms, as well as their partially condensation polymerized compound.

Silane coupling agents having an amino group have been found by the present inventors to be very effective in letting the above described resins with acid values 100-300 mg-KOH/g firmly adhere to the glass surface. The silane coupling agents having an amino group to be employed in the present invention may be exemplified by , though are not limited to, γ-aminopropyltriethoxysilane, γ-aminopropyltrimethoxysilane, N-β-aminoethyl-γ-aminopropyltrimethoxysilane, N-β-aminoethyl-γ-aminopropyltriethoxysilane, N-β-aminoethyl-γ-aminopropylmethyldimethoxysilane and the like.

The concentration of the silane coupling agent in the aqueous coating composition of the present invention is preferably 0.01-1 wt%, more preferably 0.05-0.5 wt%. If the concentration of the silane coupling agent is lower than 0.01 wt%, it could lower the adhesion strength of the resin to the glass surface, thereby reducing the durability of the coating. On the other hand, increasing the concentration of the silane coupling agent beyond 1 wt% would bring about no further augmentation of effect, and therefore not be feasible in a economical sense.

In the present specification, "aqueous coating composition" means a composition which contains water as the chief medium, and does not exclude that it contain other medium which is miscible with water, insofar as the water is the chief medium.

Coating of glass products with the aqueous coating composition of the present invention is achieved by bringing the aqueous composition in contact with the outer surface of the glass products (glass containers, plate glass, etc.) while they are still hot. This may be done, for example, by simply spraying the composition, but, as there is no limitation to it, other methods also may be adopted. For efficiency of operations and achieving efficient adhesion of the coating, the temperature of the outer surface is preferably controlled at about 80 to about 130 °C in general, and more preferably at about 90 to about 120 °C.

In order to increase their strength and attain securer adhesion of an organic coating to be applied to them, glass containers are in many cases hot-end coated (surface treatment with tin oxide or titanium oxide) through a process in which they are contacted with the vapor of butyltin trichloride, tin tetrachloride or titanium tetrachloride, etc., after molding and before annealing. The cold-end coating composition of the present invention may be commonly applied to glass containers regardless whether or not they are hot-end coated.

To achieve easy peeling property, one can apply paper labels or the like to the glass products of the present invention (directly, or after rinsing, in accordance with the manner in which they are handled at their users) with a starch-based glue conventionally used in the labeling of glass containers. As such starch-based glues, one may use either those containing, as the main ingredient, starch or denatured starch, or those which are based on a starch-acrylate mixture system in which starch or denatured starch is the main component, either of which glues contain water at about 45-65 %. Likewise, easy peeling property can also be achieved by labeling with synthetic resin-based adhesives or by employing heat-sensitive labels precoated with a synthetic resin-based adhesive.

The apparatus and methods used for assessment in the present invention will be described below.

### 1. Label peel test

In application of a paper label to a glass container in a laboratory, a glue is spread over a plastic plate thinly with a No. 10 bar coater so as to avoid too much of the glue is applied, and the paper label, once placed on it and then immediately removed off, is applied to the surface of the glass container. For application of paper labels to glass containers in a foodstuff manufacturing plant and the like, a conventional labeler or a labeler for heat-sensitive labels is used.
A corner of the paper label applied to the surface of the glass container is peeled with a nail, and the portion thus peeled is picked and pulled to try to peel the label. At a point when the label fractures, one round of the peeling process is complete. If the label does not fracture but the whole of it is peeled, the result is assessed as ⊚. If two or three rounds are required to peel whole the label, the result is assessed as ○. If not whole of the label is completely peeled even after three rounds, but the proportion of it left behind represent 30 % of it or lower, the result is assessed as Δ, and, if the proportion left behind exceeds 30 %, assessed as x.

### 2. Accelerated test for assessment of conveyor guide contamination

For accelerated tests for the assessment of conveyor guide contamination which might occur in the production lines at glass container producers or the filling lines at foodstuff manufacturers, a line simulator is used. In the present specification, "line simulator" means a testing apparatus manufactured by American Glass Research Inc. (AGR International, INC., Butler, PA, USA), which has been conventionally used in the glass bottle production industry as a means for experimentally estimating the physical damages that the surface of glass containers may receive when they are placed in the distribution process after production. The structure, dimensions and various parameters of it, and the way how to use it are as described below.

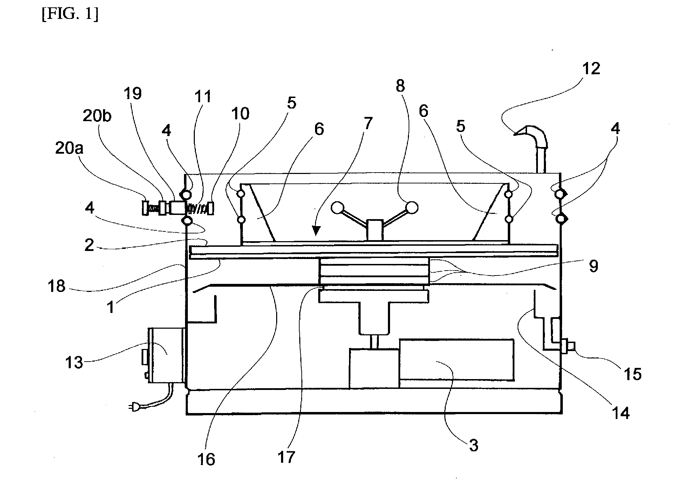

Figure 1 illustrates a schematic side view of a line simulator. The line simulator is of a generally cylindrical configuration, and is provided with, inside the cover 18 which is open at its top and forms the outer frame of the apparatus body, a rotating disk 1 (made of stainless steel) and a rotating disk 2 (made of bakelite) which is of the same diameter as, and secured to the upper surface of, the rotating disk 1 so as to rotate with it. The rotating disks 1 and 2 are driven by a motor 3 so that they rotate at a predetermined rate. Along the entire of its inner circumference, the cover 18 is provided with two upper and lower plastic guide rails 4 in the form of rings of a generally circular cross section. On the rotating disk 2 is placed a circular replaceable plate, which is selected, by a certain rule, from four different sizes of such plates 7 in accordance with the size of the glass containers to be tested, and secured to the shaft of the rotating disks 1 and 2 with a screw type fastener including handles 8. The replaceable plate 7 has brackets 6 along its circumference, and on the outer side of the brackets 6 are provided two upper and lower plastic guides 5 in the form of rings of a generally circular cross section. In the figure, three sheets of spacers 9 are inserted under the rotating disk 1. These spacers 9, each separable from the other, serve to support the rotating disk 1 from below and also are used to adjust the height of the rotating disk 1. Namely, the height of the rotating disk 1 (therefore, simultaneously, of the height of the rotating disk 2) is adjusted in accordance with the rule described below by inserting some (0-3 sheets) of the spacers 9 between the rotating disk 2 and the replaceable plate 7 according to the height of the glass containers to be tested. The glass containers about to be tested are set on the rotating disk 2 in the upright position between the guide rails 4 and 5.

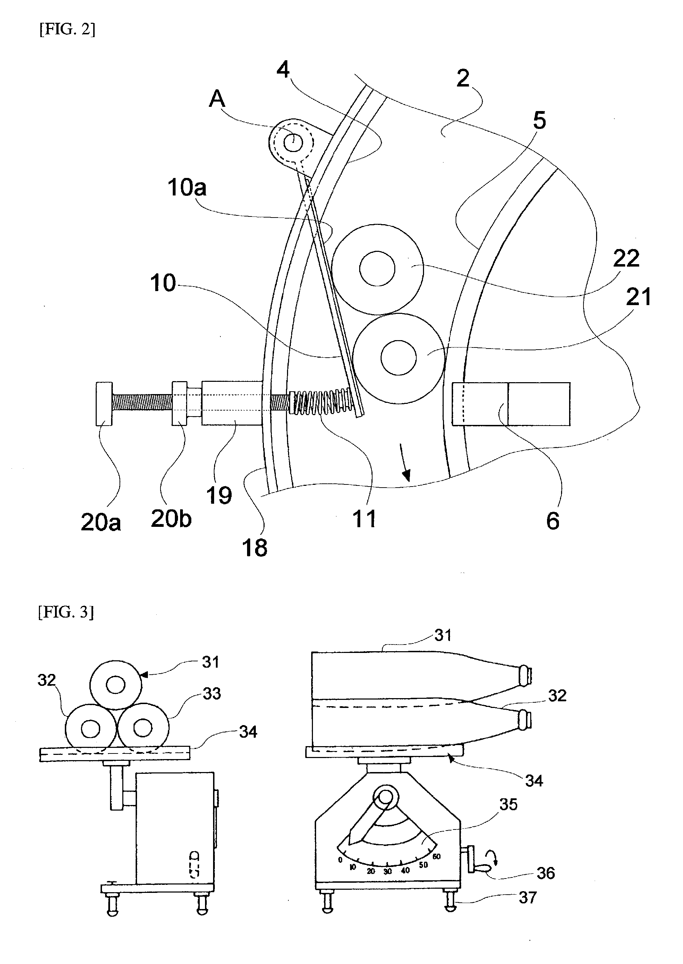

In Figure 1, a numeral 10 indicates a gate, which projects above the rotating disk 2. The gate 10, as illustrated in detail in Figure 2, is of a form of a lever which is supported pivotably about a vertical axis on a fulcrum located outside the cover 18, and positioned in such a manner that it projects, through a slot defined in the cover 18, above the rotating disk 2 inside the cover 18. In Figure 1, the gate 10 is shown only as the tip of the lever. To the gate 10 is attached, near its tip, an end of a coil spring 11. On the outer surface of the cover 18 is secured a block 19 provided with a through female screw. A gate adjusting screw 20a is screwed in the female screw, and the tip of the gate adjusting screw 20a, through the block 19, projects inside the cover 18. To the tip of the gate adjusting screw 20a is attached the other end of the aforementioned coil spring 11. A numeral 20b indicates a setscrew for gate adjustment, by which one can secure the gate adjustment screw 20a in position after adjustment has been made, by turning it about the gate adjusting screw 20a so that it is pressed against the block 19.

In Figure 1, a numeral 12 indicates a spray head (inner diameter of the nozzle: 2 mm) used for pouring water at room temperature on the surface of the glass containers placed on the rotating disk 2. Water that was poured drips through the gap between the rotating disks 1, 2 and the cover 18, and then through the gap between a circular aluminum plate 16 having a downwardly slanted circumference and the cover 18 into a drain trap 14, and is eliminated through a drain connection port 15. The duration of rotation of the rotating disks 1 and 2 is adjusted to a predetermined length with a set timer 13.

Figure 2 is a plan view of the line simulator shown in Figure 1, illustrating the structure around the gate 10. As shown in Figure 1, the gate 10 is supported pivotably about the fulcrum A, about a vertical axis. The coil spring 11 is fixed at one end of it to the tip of the gate adjustment screw 20a, and at the other end to a cylindrical pin provided near the tip of the gate 10. To the gate 10 is secured, with flat head screws, a guide member 10a, "New Light TM plate" (Saxin Corporation, ultra high molecular weight polyethylene), which is of the same material as conveyor guides, on the side where the gate contacts the glass containers. The guide member 10a is used here for assessment of contamination which could occur under the condition where glass containers continuously contact it. Numerals 21 and 22 indicate two of the glass containers set in the apparatus. For the test to be conducted in the manner described below, a number of glass containers are set on the rotating disk 2 between the guide rails 4 and 5. The arrowhead shows the direction in which the rotating disk 2 rotates.

Referring to Figure 2, the dimensions of some parts are:
1) Inner diameter of the guide rail 4 ---- 613 mm
2) Outer diameter of the cover 18 ---- 637 mm
3) The closest distance between the outer circumference of the cover 18 and the fulcrum A ---- 19 mm
4) The angle formed between the central axis of the gate adjustment screw and the fulcrum A relative to the central axis of the rotating disk 1 ---- 26.3 °
5) The distance between the fulcrum A and the tip of the gate ---- 178 mm
6) The distance between the surface at the tip of the guide member and the cover 18 ---- 30 mm

### <How to select a replaceable plate>

The four sizes of replaceable plates 7 (Nos. 1-4), which include the brackets 6 and the guide rails 5, have their diameter at their guide rails 5 of 48.3 cm (No. 1), 44.5 cm (No. 2), 40.3 cm (No. 3), and 32.0 (No. 4), respectively. Size selection of a replaceable plate 7 in the test is performed in the following manner according to the outer diameter of the glass containers:
1) For glass containers with the outer diameter of 58.4 mm or less ---- No. 1
2) For glass containers with the outer diameter of 58.4-73.7 mm ---- No. 2
3) For glass containers with the outer diameter of 73.7-96.5 mm ---- No. 3
4) For glass containers with the outer diameter of 96.5-129.5 mm ---- No. 4

### <How to place spacers>

The spacers 9 shown in Figure 1 are placed as follows according to the height of the glass containers to be tested:
1) For containers with the height of 228.6 mm or less ---- all of the three spacers 9 are positioned between the rotating disk 1 and the aluminum plate 16.
2) For containers with the height of 152.4-254.0 mm ---- two of the spacers 9 are positioned between the rotating disk 1 and the aluminum plate 16, and one of the spacers 9 between the rotating disk 2 and the replaceable plate 7.
3) For containers with the height of 177.8-279.4 mm ---- one of the spacers 9 is positioned between the rotating disk 1 and the aluminum plate 16, and two of the spacers 9 between the rotating disk 2 and the replaceable plate 7.
4) For containers with the height of 203.2-304.8 mm ---- all of the three spacers 9 are positioned between the rotating disk 2 and the replaceable plate 7.

### <How to adjust the gate>

Refer to Figure 2. For assessment of the coating on the surface of glass containers with the diameter of about 52 mm, positioning is performed using the gate adjusting screw 20a so that the distance between the surface at the tip of the guide member 10a, which is about 5 mm thick and attached to the gate 10, and the cover 18 is adjusted to 30 mm. The setscrew for gate adjustment 20b then is tightened to secure the gate adjustment screw. Herein, the coil spring 11 employed in the line simulator has its natural length of 3.6 cm, and its length when the tip of the gate adjustment screw 20a touches the cylindrical pin provided near the tip of the gate 10 is 1.3 cm. And it has the spring constant of 65.4 N/cm.

### <Speed of rotation, volume of water poured >

Speed of rotation of rotating disks 1 and 2 ---- 36 cycles/min
Volume of water poured from spray head 12 ---- 180 mL/min

### <How to use>

Following the above rules, a replaceable plate 7 and the spacers 9 are positioned in accordance with the outer diameter and the height of the glass containers about to be tested, and the gate is adjusted and then fixed. The glass container are set in line one by one along the inner circumference of the guide rails 4, in such a manner that they are in contact with the inner circumference, and without space between adjacent glass containers, until there is no space left enough for one glass container between the headmost glass container and the rearmost one. A set timer 13 is set to a desired length of time, and the volume of water poured from a spray head 12 is adjusted. The rotating disks 1 and 2 is started to rotate, and, while pouring water from the spray head on the outer surface of the glass containers, the apparatus is kept to run for the set length of time.

### <Function of line simulator>

As the rotating disks 1 and 2 rotates, the glass containers (21, 22 and the like) on them are conveyed toward the gate 10, and, pushing the gate 10 one after another and making open it against the bias of the coil spring 11, pass through the gate 10. At the same time, the coating on the glass surface is rubbed off due to the friction with the guide member, and the extent of this is reflected in the degree of contamination of the guide member. By subjecting the glass containers to this condition for a certain length of time, the treatment in the line simulator allows to estimate, in a shorter time under harsher conditions, the durability of the coating on the glass containers which will be let stream on conveyor lines.

### 3. Method for measurement of surface slide angle

A Japan Glass Bottle Association's standard (set as of June 15, 1977, 6th amendment as of March 22, 2005), "7.14 Method for measurement of surface slide angle" stipulates that glass bottles shall be measured for their surface slide angles according to the following procedures and criteria.

### <Samples>

(1) Sample bottles: Take bottles whose coating has dried completely, and let them cool to room temperature to make the sample bottles.
(2) Collection of sample bottles: Take at least 9 bottles at one measurement. But care should be taken not to touch the body surface of the bottles with hand during sampling and measurement.

### <Method for measurement> (see Fig. 3)

(1) Place sample bottles 32 and 33, in touch with each other, on the bottle retention platform 34 kept horizontal with the balancing screw 37, and let the bottoms of the bottles closely fit the stopper and apply stoppers so as to prevent the bottles 32 and 33 from swaying in the lateral direction.
(2) Place a sample bottle 31 on the sample bottles 32 and 33 to stack them in the form of a triangle.
(3) The sample bottles must be oriented in the same direction, and must be placed so that they contact with their strait surfaces, avoiding any surface containing a carving or a seam.
(4) Turn the handle 36 to gradually slant the bottle retention platform, and read and record the scale when the sample bottle 31 begins to slide.
(5) Measurement must be done with three bottles at a time, which must not be reused for measurement. However, measurement must be done at least three times.

### [Examples]

The present invention will be described in further detail below with reference to examples. However, it is not intended that the present invention be limited to the examples.

### [Example 1]

An aqueous dispersion was prepared from a copolymer of α-olefin, maleic anhydride and maleic acid mono-isopropyl ester (the α-olefin has more than 10 carbon atoms) [manufactured by Baker Petrolite, product name; Ceramer-1608, CAS No. 75535-27-2, acid value; 154 mg-KOH/g (hereafter, unit omitted), saponification value; 190 mg-KOH/g (hereinafter, unit omitted), number average molecular weight; 2580] in a conventional manner using N,N-dimethylaminoethanol (aqueous dispersion A). The total concentration of the resin and the base combined was about 15 wt% [ratio in wt%; resin:base = about 2:1], and the average particle size was about 0.2 µm. 6.7 mL of this aqueous dispersion was added to 800 mL of distilled water and mixed (liquid A-1). Further, 1.0 mL of γ-aminopropyltriethoxysilane (manufactured by Toray Dow Coming, Co., Ltd., A-1100), a silane coupling agent having an amino group, was added to 200 mL of distilled water and mixed (liquid C-1). Liquids A-1 and C-1 were mixed, and the resulting solution was made an aqueous coating (cold-end coating) composition for treatment of glass surfaces.

Then, glass containers for health drink, 140 mL of capacity and 160 g in weight, were provided, whose surface had been hot-end coated in a conventional manner, and they were kept at 115 °C for 60 minutes in a constant temperature drying oven. The above aqueous coating composition for treatment of glass surfaces was transferred to the cup of a handy-type spray gun, and the volume to be sprayed was fixed to 80 mL/min by adjusting at the hand-gun the volume and pressure of the blowing air supplied by a compressor. Then, the above glass containers whose outer surface was warmed at about 105°C were placed one by one on the center of a turn table, and the outer surface of them was coated, evenly and avoiding formation of any spot, with the composition by spraying it on them from a distance of about 50 cm while the turn table rotated two rounds (2 seconds per rotation). After coating, the glass containers were let stand to cool to room temperature. Following this procedure, the necessary number of cold-end coated glass containers were prepared to perform the following tests.

Assessment of the lubricating property of the surface of the glass containers was performed according to the aforementioned "7.14 Method for measurement of surface slide angle", Japan Glass Bottle Association's standard (n = 12). Measurement of unrinsed glass containers showed that their surface slide angles were 8-11°. Measurement of glass containers which had been immersed (rinsed) in hot water at 70 °C for 10 minutes showed their surface slide angles to be 7-8°. A separate measurement conducted with the same glass containers which had not been cold-end coated showed their surface slide angle to be 21-25°. These results indicate that both the unrinsed and hot-water rinsed glass containers had sufficient amount of the coating with the α-olefin/maleic anhydride-based copolymer resin retained on their surface.

### [Example 2]

About 100 L of an aqueous coating (cold-end coating) composition for the treatment of glass surfaces was prepared following the same blending ratio as in Example 1. Water employed was purified water (ion-exchanged water). Glass containers for health drink, 140 mL of capacity and 160 g in weight, which had been hot-end coated on their surface in the production line at a bottle manufacturing plant, strain-removed in an annealing lehr, and whose surface temperature was about 100-110 °C, were sprayed on their surface with the coating composition through two spray guns. The volume sprayed was 80 or 100 mL/min per a gun. Spraying was performed by letting the spray guns run for about 4 seconds, from both sides, along a line of 30 glass containers.

After having let them cool to room temperature, assessment of the lubricating property of the surface of the glass containers was performed according to the aforementioned "7.14 Method for measurement of surface slide angle", Japan Glass Bottle Association's standard (n = 12). The surface slide angles of unrinsed glass containers were 7-8° or 7-9°, respectively. The surface slide angles of the glass containers that had been immersed in hot water at 70 °C for 10 minutes were 10-13° or 10-14°, respectively. Further, the surface slide angle of the glass containers that had been sprayed through the guns adjusted to 100 mL/min per gun and immersed in hot water at 85 °C for 10 minutes were 9-12°. These results indicate that both the unrinsed and hot-water rinsed glass containers had sufficient amount of the coating with the α-olefin/maleic anhydride-based copolymer resin retained on their surface.

The glass containers that had been immersed in hot-water at 70 °C for 10 minutes were subjected to labeling using a labeler for heat-sensitive labels. Heat-sensitive labels employed were made of paper (148 mm x 68 mm, 107 g/m², including adhesive), and their adhesive was synthetic one, and they were applied on the outer surface of the glass containers after activating the adhesive by heating it to about 110 °C with a blow of hot air. Ten containers each were sampled from these products thus prepared, and they were let stand for 24 hours at room temperature. Each label was found securely attached to the glass container, and no change was observed even after rubbing them hard on the surface with a finger. The peel test was performed on these labels and it recorded six ○'s and four Δ's with the glass containers for which the spray volume of 80 mL/min was chosen in coating, while it recorded four ⊚'s and six ○'s with the glass containers for which the spray volume of 100 mL/min was chosen.

Further, five glass containers that had been sprayed at 80 mL/min and then immersed in hot water at 70 °C for 10 minutes were labeled with paper labels (148 mm x 68 mm, 85 g/m²) using starch-based glue (manufactured by Tokiwa Chemical Industries Co., Ltd.; Tokiwanol 780). After having been let stand for 72 hours at room temperature, the labels were found securely attached to the glass container, and no change was observed even after rubbing them hard on the surface with a finger. The peel test performed on these labels recorded four ○'s and one Δ.

The above results indicates that the glass containers subjected to cold-end coating according to Example 2 show easy peeling property, even after hot-water rinsing of the surface of the glass containers, with regard to heat-sensitive paper labels, whether the spray volume had been 80 mL/min or 100 mL/min per gun. Further, it is also shown that the glass containers for which the spray volume was 80 mL/min per gun exhibit easy peeling property, even after having been rinsed with hot water, with regard to paper labels applied with starch-based glue.

### [Example 3]

530 mL of the same aqueous dispersion A as in Example 1 was added to 80 L of purified water (ion-exchanged water) and mixed (liquid A-2). Further, 80 mL of γ-aminopropyltriethoxysilane (manufactured by Toray Dow Coming, Co., Ltd., A-1100), a silane coupling agent having an amino group, was added to 20 L of purified water (ion-exchanged water) and mixed (liquid C-2). Liquids A-2 and C-2 were mixed, and the resulting solution was made an aqueous coating (cold-end coating) composition for treatment of glass surfaces. With this aqueous coating composition, coating was performed on the surface of the glass container in a production line at a bottle manufacturing plant, in the same manner as in Example 2 except that the spray volume was set at 80 mL/min per gun.

After having let them cool to room temperature, assessment of the lubricating property of the surface of the glass containers was performed according to the aforementioned "7.14 Method for measurement of surface slide angle", Japan Glass Bottle Association's standard (n = 12). The surface slide angles of unrinsed glass containers were 8-13°. The surface slide angles of the glass containers that had been immersed in hot water at 70 °C for 10 minutes were 11-14°. These results indicate that both the unrinsed and hot-water rinsed glass containers had sufficient amount of the coating with the α-olefin/maleic anhydride-based copolymer resin retained on their surface.

### [Comparative Example 1]

One L of an aqueous emulsion of polyethylene wax (manufactured by Honeywell, AC#629 polyethylene wax, acid value; 15, softening point of the resin; 101 °C), (prepared by a conventional method employing a nonionic surfactant and potassium oleate as emulsifiers, and KOH as a neutralizing agent, solid content; about 12 wt%) was added to 100 L of purified water (ion-exchanged water) and mixed. The solution thus obtained was made a aqueous coating (cold-end coating) composition for treatment of glass surfaces. With this aqueous coating composition, coating was performed in the production line at the bottle manufacturing plant, in the same manner as in Example 2 except that the spray volume was set at 90 mL/min per gun.

After having let them cool to room temperature, assessment of the lubricating property of the surface of the glass containers was performed according to the aforementioned "7.14 Method for measurement of surface slide angle", Japan Glass Bottle Association's standard (n = 12). The surface slide angles of unrinsed glass containers were 7-9°. The result of measurement of the surface slide angles of the glass containers that had been immersed in hot water at 70 °C for 10 minutes were 14-18°. These results indicate that the conventional polyethylene coating easily fall off compared with the coating with the α-olefin/maleic anhydride-based copolymer resin according to the present invention.

Ten glass containers that had been immersed in hot-water at 70 °C for 10 minutes were labeled with heat-sensitive labels in the same manner as in Example 2, and were let stand for 24 hours at room temperature. Each label was found securely attached to the glass container, and no change was observed even after rubbing them hard on the surface with a finger. The peel test that was performed on these labels recorded ten x's. The result indicates that the aqueous coating composition for treatment of glass surfaces of Comparative Example 1, while acting as a cold-end coating agent, fails to exhibit easy peeling property with paper labels, after the surface of the glass container is subjected to hot water rinsing.

### [Example 4]

1350 mL of the same aqueous dispersion A as in Example 1 was added to 80 L of purified water (ion-exchanged water) and mixed (liquid A-3). Further, 200 mL of γ-aminopropyltriethoxysilane (manufactured by Shin-Etsu Chemical Co., Ltd., KBE-903), a silane coupling agent having an amino group, was added to 20 L of purified water (ion-exchanged water) and mixed (liquid C-3). Liquids A-3 and C-3 were mixed, and the resulting solution was made an aqueous coating (cold-end coating) composition for treatment of glass surfaces. With this aqueous coating composition, coating was performed on the surface of the glass container in the production line at the bottle manufacturing plant, in the same manner as in Example 2 except that the spray volume was set at 100 mL/min per gun.

After having let them cool to room temperature, assessment of the lubricating property of the surface of the glass containers was performed according to the aforementioned "7.14 Method for measurement of surface slide angle", Japan Glass Bottle Association's standard (n = 12). The surface slide angles of unrinsed glass containers were 7-8°. The surface slide angles measured of the glass containers that had been immersed in hot water at 70 °C or 85 °C for 10 minutes were 8-9° or 9-10°, respectively. These results indicate that both the unrinsed and hot-water rinsed glass containers had sufficient amount of the coating with the α-olefin/maleic anhydride-based copolymer resin retained on their surface.

### [Example 5]

An aqueous dispersion was prepared from a copolymer of α-olefin, maleic anhydride and maleic acid mono-isopropyl ester (the α-olefin has more than 10 carbon atoms) [manufactured by Baker Petrolite, product name; Ceramer-1608, CAS No. 75535-27-2, acid value; 154 mg-KOH/g (hereafter, unit omitted), saponification value; 190 mg-KOH/g (hereinafter, unit omitted), number average molecular weight; 2580] in a conventional manner using potassium hydroxide (aqueous dispersion B). The total concentration of the resin and the base combined was about 17 wt% [ratio in wt%; resin:KOH = about 5:1], and the average particle size was about 0.1 µm. 670 mL of this aqueous dispersion was added to 80 L of purified water (ion-exchanged water) and mixed (liquid B-1). Further, 100 mL of γ-aminopropyltriethoxysilane (manufactured by Shin-Etsu Chemical Co., Ltd., KBE-903), a silane coupling agent having an amino group, was added to 20 L of purified water (ion-exchanged water) and mixed (liquid C-4). Liquids B-1 and C-4 were mixed, and the resulting solution was made an aqueous coating (cold-end coating) composition for treatment of glass surfaces. With this aqueous coating composition, coating was performed on the surface of the glass container in the production line at the bottle manufacturing plant, in the same manner as in Example 2 except that the spray volume was set at 100 mL/min per gun.

After having let them cool to room temperature, assessment of the lubricating property of the surface of the glass containers was performed according to the aforementioned "7.14 Method for measurement of surface slide angle", Japan Glass Bottle Association's standard (n = 12). The surface slide angles of unrinsed glass containers were 8-10°. The surface slide angles measured of the glass containers that had been immersed in hot water at 80 °C for 10 minutes were 9-11°. These results indicate that both the unrinsed and hot-water rinsed glass containers had sufficient amount of the coating with the α-olefin/maleic anhydride-based copolymer resin retained on their surface.

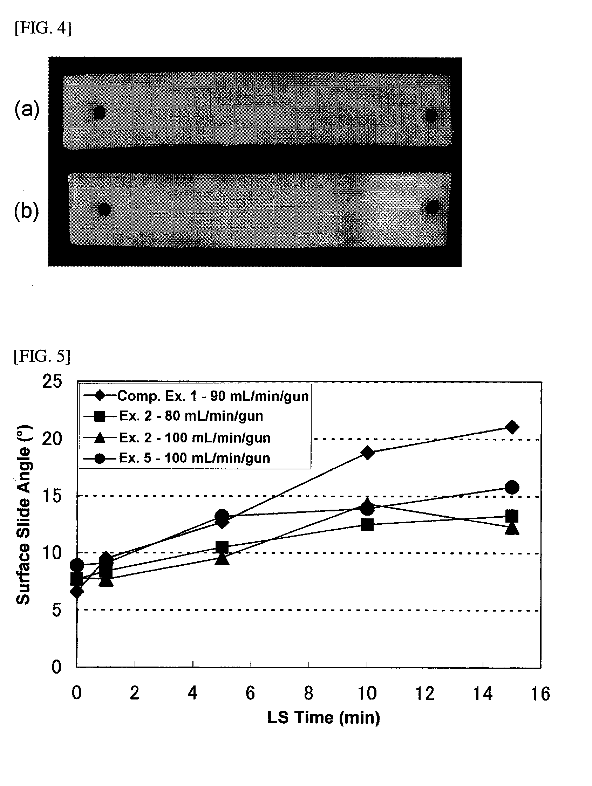

160 glass containers each which were prepared in Example 2 (spray volume 80 or 100 mL/min per gun), Example 4, Example 5 (spray volume 100 mL/min per gun), and Comparative Example 1 (spray volume 90 mL/min per gun), respectively, were divided into 5 groups, 32 containers each. The 32 containers/group were subjected to the line simulator (LS), and samples, LS = 0, 1, 5, 10 and 15 minutes, were prepared. Further, the guide member that had been fixed to the gate were inspected for contamination after the total duration of 31 minutes of the line simulator test. As a result, any of the glass containers prepared in Example 2, Example 4 and Example 5 were found to have caused no contamination of the guide member, leaving the guide member as clean as it was before the start of the test, whereas the glass containers prepared in Comparative Example 1 were found to have caused a marked contamination of the guide member. Typical examples of the surface of the guide member after these tests are shown in Figure 4, with contraposed photographs. In the figure, the upper photograph (a) shows the guide member after the test with the glass containers prepared in Example 2 (spray volume: 80 mL/min per gun), and the lower photograph (b) shows the guide member after the test with the glass containers prepared in Comparative Example 1.

The two types of glass containers prepared in Example 2 (spray volume: 80 mL/min and 100 mL/min per gun) and the glass containers prepared in Example 5 and Comparative Example 1 were assessed for their variations in the surface slide angle during their line simulator (LS) treatment, for each duration of treatment of 0, 1, 5, 10 and 15 minutes, according to the aforementioned "7.14 Method for measurement of surface slide angle", Japan Glass Bottle Association's standard (n = 12). The results are shown in Tables 1-4. In addition, the variation in the mean value of the surface slide angles with the time lapsed in the test are shown in Figure 5. These results indicates that the rise in the surface slide angle is markedly suppressed in the glass containers treated with the aqueous coating composition of Example 2 and Example 5, and lubricating property being maintained, as compared with those prepared in Comparative Example 1.

**[Table 1]**

| Table 1. Glass containers prepared in Example 2 (spray volume; 80 mL/min/gun) | | |
|---|---|---|
| Time lapsed in Line simulator test (min) | Surface slide angle (°) | Mean value, Surface slide angle (°) |
| 0 | 7-8 | 7.7 |
| 1 | 7-10 | 8.4 |
| 5 | 8-12 | 10.5 |
| 10 | 9-15 | 12.5 |
| 15 | 10-15 | 13.3 |

**[Table 2]**

| Table 2. Glass containers prepared in Example 2 (spray volume; 100 mL/min/gun) | | |
|---|---|---|
| Time lapsed in Line simulator test (min) | Surface slide angle (°) | Mean value, Surface slide angle (°) |
| 0 | 7-9 | 7.8 |
| 1 | 7-9 | 7.7 |
| 5 | 7-12 | 9.6 |
| 10 | 12-17 | 14.3 |
| 15 | 11-15 | 12.3 |

**[Table 3]**

| Table 3. Glass containers prepared in Example 5 (spray volume; 100 mL/min/gun) | | |
|---|---|---|
| Time lapsed in Line simulator test (min) | Surface slide angle (°) | Mean value, Surface slide angle (°) |
| 0 | 8-10 | 8.9 |
| 1 | 8-10 | 9.1 |
| 5 | 12-15 | 13.2 |
| 10 | 12-15 | 13.9 |
| 15 | 15-17 | 15.8 |

**[Table 4]**

| Table 4. Glass containers prepared in Comparative Example 1 (spray volume; 90 mL/min/gun) | | |
|---|---|---|
| Time lapsed in Line simulator test (min) | Surface slide angle (°) | Mean value, Surface slide angle (°) |
| 0 | 6-8 | 6.6 |
| 1 | 7-12 | 9.5 |
| 5 | 9-17 | 12.7 |
| 10 | 15-24 | 18.8 |
| 15 | 16-28 | 21.1 |

The above results on the variations in lubricating property of the surface during the line simulator (LS) treatment indicate that the aqueous coating compositions for the treatment of glass surfaces of Example 2 and Example 5 form a more durable cold-end coating compared with the conventional coating composition as represented by Comparative Example 1.

### INDUSTRIAL APPLICABILITY

The present invention provides an aqueous coating agent for preparing glass products in which strength reduction is prevented by endowing it with scratch resistance through reduced friction coefficient of their surface, as well as glass products coated with the coating agent that are characterized in that they will cause no contamination of conveyor lines, in particular conveyor guides, caused by wearing and falling off of the coating, and that they allow stable application of labels, either with a starch-based glue or a synthetic adhesive, so that the labels will not spontaneously fall off when the glass products are in the distribution process, but it allows one to peel them with ease when trying to do so for recycling them after use (easy peeling property).

## Claims

1. An aqueous coating composition prepared by addition of a resin to water and dispersion thereof in the presence of a base and addition further of a silane coupling agent, wherein the resin is at least one compound selected from the group consisting of an α-olefin/maleic anhydride copolymer and a partial reaction product of the copolymer.

2. The aqueous coating composition according to claim 1, wherein the acid value of the resin is 100-300 mg-KOH/g.

3. The aqueous coating composition according to claim 1 or 2, wherein the saponification value of the resin is 150-320mg-KOH/g.

4. The aqueous coating composition according to one of claims 1 to 3, wherein the number average molecular weight of the resin is 1500-4000.

5. The aqueous coating composition according to one of claims 1 to 4, wherein the number of the carbon atoms that form the α-olefin is 10-50.

6. The aqueous coating composition according to one of claims 1 to 5, wherein the partial reaction product of the copolymer is a product obtained by graft modification of at least part of maleic anhydride monomer units by alkyl esterification.

7. The aqueous coating composition according to claim 6, wherein the alkyl esterification is mono-alkyl esterification.

8. The aqueous coating composition according to one of claims 1 to 7, wherein the silane coupling agent has an amino group.

9. The aqueous coating composition according to one of claims 1 to 8, wherein the total concentration of the resin and the base combined is 0.05-1 wt%.

10. The aqueous coating composition according to one of claims 1 to 9, wherein the concentration of the resin is 0.03-0.6 wt%.

11. The aqueous coating composition according to one of claims 1 to 10, wherein the concentration of the silane coupling agent is 0.01-1 wt%.

12. The aqueous coating composition according to one of claims 1 to 11, wherein the composition contains no other surfactant than the resin.

13. The aqueous coating composition according to one of claims 1 to 12, wherein the acid value of the resin is 120-250 mg-KOH/g.

14. The aqueous coating composition according to one of claims 1 to 13, wherein the saponification value of the resin is 160-270 mg-KOH/g.

15. The aqueous coating composition according to one of claims 1 to 14, wherein the number of the carbon atoms that form the α-olefin is 14-40.

16. A glass product which has the surface thereof coated with the aqueous coating composition according to one of claims 1 to 15.

17. The glass product according to claim 16, wherein the glass product which has the surface thereof coated with the aqueous coating composition has, before thus coated, been hot-end coated on the surface.

18. The glass product according to claim 16 or 17 which is a glass container.

19. The glass product according to claim 16 which is plate glass.

20. A method for treatment of the surface of a glass comprising bringing the surface of the glass into contact with the aqueous coating composition according to one of claims 1 to 15 at the surface temperature of 80-130 °C.
